(19) Europäisches Patentamt
European Patent Office
Office européen des brevets

(11) Veröffentlichungsnummer: **0 436 914 B1**

# (12) EUROPÄISCHE PATENTSCHRIFT

(45) Veröffentlichungstag der Patentschrift: **10.08.94**

(21) Anmeldenummer: **90125206.4**

(22) Anmeldetag: **21.12.90**

(51) Int. Cl.5: **C08F 271/02**, C08F 291/00, C08L 101/00, //(C08L101/00, 51:00)

## (54) Pfropfpolymerisate als Flammschutzmittel.

(30) Priorität: **03.01.90 DE 4000047**
**05.04.90 DE 4010960**

(43) Veröffentlichungstag der Anmeldung:
**17.07.91 Patentblatt 91/29**

(45) Bekanntmachung des Hinweises auf die Patenterteilung:
**10.08.94 Patentblatt 94/32**

(84) Benannte Vertragsstaaten:
**DE FR GB IT NL**

(56) Entgegenhaltungen:
**DE-A- 2 256 301**

**WPI FILE SUPPLIER, AN=74-16440V [09], Derwent Publications Ltd., London (GB)&NUM;**

(73) Patentinhaber: **BAYER AG**

**D-51368 Leverkusen (DE)**

(72) Erfinder: **Lindner, Christian, Dr.**
**Im Wasserblech 11**
**W-5000 Köln 80 (DE)**
Erfinder: **Eichenauer, Herbert, Dr.**
**Gustav Heinemann-Strasse 3**
**W-4047 Dormagen 1 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Gegenstand der Erfindung ist die Verwendung von Pfropfpolymerisaten aus

a) 5 bis 95 Gew.-% eines Copolymerisats von 20 bis 60 Gew.-% eines 1,3,5-Triazinderivats der Formel (I)

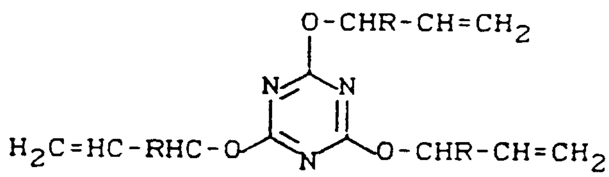

I

mit

R = H, $C_1$-$C_2$-Alkyl und

40 bis 80 Gew.-% anderen Vinylmonomeren als Pfropfgrundlage und

b) 5 bis 95 Gew.-% eines Polymerisats von Styrol, α-Methylstyrol, Paramethylstyrol, Acrylnitril, Methacrylnitril, $C_1$-$C_8$-Alkylacrylaten, $C_1$-$C_8$-Alkylmethacrylaten, Maleinimiden, Maleinanhydrid, Vinylether, Vinylester, Ethylen, Methacrylamid, Acrylsäure, Methacrylsäure, Styrol, Sulfonsäure oder von deren Mischungen als Pfropfauflage als Flammschützmittel für andere Chemiewerkstoffe

Bevorzugt enthalten die Pfropfpolymerisate 10 bis 85, insbesondere 20 bis 70 Gew.-% der Pfropfgrundlage a) und entsprechend 90 bis 15, insbesondere 80 bis 30 Gew.-% des Polymerisats b).

Diese Pfropfpolymerisate stellen thermoplastische Formmassen dar. Sie dienen als Additive zu anderen Chemiewerkstoffen mit thermoplastischem Verhalten und verleihen diesen flammwidrige Eigenschaften. Außerdem weisen die Formmassen, enthaltend die erfindungsgemäßen Pfropfpolymerisate als Flammschutzkomponente verbesserte Schmelzeigenschaften und Wärmeformbeständigkeit im Vergleich zu Polytetrafluorethylen enthaltenden Formmassen.

Sie werden bevorzugt in Mengen von etwa 0,1 bis 20 Gew.-% (bezogen auf die flammgeschützte thermoplastische Formmasse verwendet. Die erfindungsgemäßen Pfropfpolymerisate sind als Flammschutzmittel hoch wirksam aber frei von Halogen (wie Brom, Chlor, Fluor). Sie können mit anderen bekannten Flammschutzadditiven kombiniert werden und verstärken häufig deren Wirkung in unerwarteter Weise.

Die erfindungsgemäßen Pfropfpolymerisate können durch Polymerisation der Monomeren b) in Gegenwart teilchenförmiger Triazincopolymerer a) hergestellt werden. Man verwendet hierzu die für Pfropfpolymerisation üblichen und bekannten Methoden. Beispielsweise ist die Herstellung solcher Pfropfpolymerisate aus JP 74005624 und aus DE-A 22 56 301 bekannt.

Geeignete Monomere b) sind Styrol, Paramethylstyrol, α-Methylstyrol, Acrylnitril, Methacrylnitril, $C_1$-$C_8$-Alkylacrylat, $C_1$-$C_8$-Alkylmethacrylat, Vinylacetat, Vinylpropionat, N-Methylpyrrolidon, Butadien, Isopren, Maleinsäureanhydrid, Maleinsäureimide, Acrylsäure, Methacrylsäure, Acrylamid, Methacrylamid. Besonders bevorzugt sind Styrol, $C_1$-$C_8$-Alkylacrylate wie Methylacrylat, Ethylacrylat, Hexylacrylat und Dimethylhexylacrylat, $C_1$-$C_8$-Alkylmethacrylate (bevorzugt Methylmethacrylat) und Acrylnitril.

Bevorzugte Copolymerisate a) werden erhalten aus Triazinen der Formel (I) und einer Mischung aus wenigstens zwei olefinisch ungesättigten Monomeren, beispielsweise Styrol und Acrylnitril oder Styrol und $C_1$-$C_8$-Alkylacrylat (bevorzugt Methylacrylat, Ethylacrylat oder Styrol) und $C_1$-$C_8$-Alkylmethacrylat (bevorzugt Methylmethacrylat). Besonders bevorzugt wird hierbei Styrol in höchstens einer solchen Menge eingesetzt, daß das Produkt a) nicht mehr als 50 Gew.-% einpolymerisiertes Styrol enthält.

Die Copolymerisate a) können durch übliche Emulsionspolymerisation in wäßrigem Medium kontinuierlich oder diskontinuierlich hergestellt werden. Als Emulgatoren benutzt man beispielsweise höhere aliphatische Fettsäuren, organische Sulfonsäuren oder Schwefelsäurehalbester (anionische Emulgatoren) oder polyethoxydierte Phenolderivate und aliphatische polyethoxydierte Polyetherblockcopolymere (nicht ionische Emulgatoren).

Die Polymerisation kann durch die üblicherweise verwendeten Radikalinitiatoren ausgelöst werden beispielsweise durch Peroxide, Persäuren, Hydroperoxide, Persulfate, Perphosphate sowie durch Redoxinitiatorsysteme. Besonders bevorzugt sind wasserlösliche anorganische Peroxosalze wie Kaliumperoxodisulfat und Kaliumperoxodiphosphat.

Die Copolymerisation zur Herstellung der Pfropfgrundlage a) wird bevorzugt zu möglichst hohen Umsätzen (mehr als 97 Gew.-%, bevorzugt 99 Gew.-% oder mehr) geführt. Dadurch wird erreicht, daß diese Polymerisate stark vernetzt sind und Gelgehalte über 90 Gew.-% aufweisen.

Die Pfropfgrundlagen a) sind im allgemeinen teilchenförmig. Die Größe der Teilchen (Teilchendurchmesser $d_{50}$) ist bevorzugt 0,05 bis 1 $\mu$, bevorzugt 0,06 bis 0,3 $\mu$ (ermittelt durch Lichtstreuung).

Von den auf die Pfropfgrundlage a) aufpolymerisierten Monomeren sind Mischungen aus Acrylnitril und/oder Methylmethacrylat mit Styrolgehalten von 90 bis 30 Gew.-% bevorzugt.

Die Pfropfpolymerisation wird bevorzugt in Suspension, Dispersion und besonders bevorzugt in Emulsion durchgeführt, wobei man von der bereits als wäßrige Emulsion vorliegenden Pfropfgrundlage a) ausgeht. Die Monomeren werden nach den üblichen Methoden der Pfropfpolymerisation z.B. bei Temperaturen von 40 bis 90° mit Hilfe der oben angeführten Emulgatoren und der oben angeführten Initiatoren durchgeführt.

Bei der bevorzugten Pfropfpolymerisation in wäßriger Emulsion fallen Latices (Emulsionen) der Pfropfpolymerisate mit Feststoffgehalten bis zu ca. 55 Gew.-% an.

Die Pfropfpolymerisate können aus der Emulsion isoliert werden, z.B. durch Koagulation mit Hilfe von anorganischen Salzen, Säuren oder Basen und durch Erhöhung oder Erniedrigung der Temperatur. Die Polymerisate fallen dabei - nach Trocknung - zumeist als Pulver an.

Sie können als thermoplastische Formmassen verwendet werden, dienen aber auch zur Herstellung von thermoplastischen Formmassen mit flammgeschützten Eigenschaften auf der Basis von anderen Chemiewerkstoffen.

Die Formmassen enthalten 0,1 bis 20 Gew.-%, insbesondere 0,5 bis 10 Gew.-% der erfindungsgemäßen Pfropfpolymerisate. Die erfindungsgemäßen Pfropfpolymerisate können mit anderen Chemiewerkstoffen in der Schmelze gemischt (compoundiert) werden, z.B. in Knetern oder Schnecken.

Falls der andere Chemiewerkstoff selbst als Emulsion vorliegt, kann man diese Emulsion mit der Emulsion des erfindungsgemäßen Pfropfpolymerisates mischen und diese Mischung zum Granulat oder Pulver weiterverarbeiten. Diese Verfahrensweise ist bevorzugt. Bevorzugte andere Chemiewerkstoffe sind Polystyrol, Polymethylmethacrylat, Styrol-Acrylnitril-Copolymerisat, Methylmethacrylat-Styrol-Copolymerisat, Styrol-Maleinsäureanhydrid-Copolymer sowie Pfropfpolymerisate auf Kautschukbasis enthaltende thermoplastische Kunststoffe wie ABS, schlagfestes Polystyrol,

Den Formmassen können übliche Additive wie Antioxidantien, Gleitmittel, Lichtschutzmittel, Füllstoffe, Pigmente, Antistatika und insbesondere weitere Flammschutzmittel in üblichen Mengen zugesetzt werden. Als weitere Flammschutzmittel können chlorhaltige Verbindungen (z.B. Derivate des Hexachlorcyclopentadiens, chlorierte Styrole in polymerisierter Form), bromhaltige Verbindungen (z.B. Octabromdiphenyl, Octabromdiphenylether, Decabromdiphenylether, Tetrabrombisphenol A, Kondensationsprodukte des Tetrabrombisphenol A, Tetrabromphthalsäureanhydrid, Polymerisate des Tribromstyrols, Poly(pentabrombenzyl)acrylat, phosphorhaltige Verbindungen (z.B. Triphenylphosphat, Trikresylphosphat) sowie Synergisten für diese Flammschutzmittel (z.B. Antimonoxid, Zinnoxid, Zinkoxid) verwendet werden. Die erfindungsgemäßen Formmassen können z.B. durch Extrusion, Kalandrierung und Spritzguß zu Formteilen wie beispielsweise Gehäuseteile jeder Art und Teile für Kraftfahrzeuge verarbeitet werden.

## Beispiele

### I) Pfropfgrundlagen und Vergleichsversuche

In einem Reaktor werden vorgelegt:
4000 Gew.-Teile Wasser
10 Gew.-Teile Na-$C_{14}$-$C_{16}$-Alkylsulfonsäuren
Bei 70°C und nach Zugabe einer Lösung von 10 Gew.-Teilen Kaliumperoxidisulfat in 200 Gew.-Teilen Wasser werden folgende 2 Zuläufe innerhalb von 5 Stunden bei 70°C in den Reaktor eingespeist:

| | Zulauf 1 | Zulauf 2 | |
|---|---|---|---|
| | (Gew.-Teile) | | |
| I.1 | 1700 n-BA<br>300 S<br>1000 TAC | 2000 Wasser<br>50 Emulgator | erfindungsgemäß |
| I.2 | 2250 n-BA<br>300 S<br>450 TAC | 2000 Wasser<br>50 Emulgator | Vergleich |
| I.3 | 2700 n-BA<br>300 S | 2000 Wasser<br>50 Emulgator | Vergleich |
| n-BA = n-Butylacrylat<br>S = Styrol<br>TAC = Triallylcyanurat<br>Emulgator = Na-Salz von $C_{14}$-$C_{16}$-Alkylsulfonsäuren | | | |

Nach Beendigung des Zulaufs wird noch 4 Stunden bei 70 °C auspolymerisiert; es fallen Latices mit Feststoffgehalten von ca. 32 Gew.-% und mittleren Teilchendurchmessern (d50) von 0,09 bis 0,1 µm an. Produkt I.1 besitzt eine Iodzahl von 68; Produkt I.2 eine Iodzahl von 17,5. Die Polymerisate, mit Ausnahme von I.3, besitzen Gelgehalte von 91 bis 93 Gew.-%.

II) Pfropfpolymerisate und Vergleichsversuche

In einem Reaktor werden 616 Gew.-Teile Wasser und 4792 Gew.-Teile der Latices gemäß I) vorgelegt. Nach Aufheizen auf 70 °C und Initiierung mit einer Lösung aus 5 Gew.-Teilen Kaliumperoxodisulfat in 100 Gew.-Teilen Wasser werden folgende Zuläufe innerhalb von 4 Stunden bei 70 °C getrennt aber gleichzeitig zudosiert:

| | | |
|---|---|---|
| Zulauf 1: | Styrol<br>Acrylnitril | 1108 Gew.-Teile<br>430 Gew.-Teile |
| Zulauf 2: | Wasser<br>Na-Salz von $C_{14}$-$C_{16}$-Alkylsulfonsäuren | 1500 Gew.-Teile<br>20 Gew.-Teile |

Anschließend wird 4 Stunden bei 70 °C auspolymerisiert.

| Emulsion in der Vorlage | | |
|---|---|---|
| II.1 | I.1 | erfindungsgemäß |
| II.2 | I.2 | Vergleich |
| II.3 | I.3 | Vergleich |

Es fallen stabile Emulsionen mit Feststoffgehalten von ca. 36 Gew.-% an.

III) Weitere verwendete Stoffe

1. Styrol-Acrylnitril-Copolymerisat mit einem Gehalt von 26 Gew.-% Acrylnitril und einem Staudinger-Index von 0,63 g/l (gemessen in Dimethylformamid).
2. Pfropfpolymerisat von 50 Gew.-% Styrol und Acrylnitril (28 Gew.-% Acrylnitril und 72 Gew.-% Styrol) auf 50 Gew.-% grobteiliges vernetztes Polybutadien mit einem mittleren Teilchendurchmesser von 0,4 µm. Das Pfropfpolymerisat wird als Pulver und als wäßrige Emulsion eingesetzt.
3. Gemisch aus 90 Gew.-% des Pfropfpolymerisats III.2 und 10 Gew.-% Polytetrafluorethylen (erhalten durch gemeinsame Fällung entsprechender Latices).
4. Additive

4.1 Siliconöl
4.2 Tetrabrombisphenol A
4.3 Antimontrioxid $Sb_2O_3$
4.4 Pentaerythrittetrastearat

IV) Herstellung der Formmassen: Mischungen aus I) und III)

Die Polymerisatlatices I.1 bis I.3 werden im folgenden Mischungsverhältnis mit dem Latex III.2 gemischt:
10 Gew.-Teile I.1 bis I.3
90 Gew.-Teile III.2
bezogen auf Polymerfeststoffgehalte.

Die Latexmischungen (Emulsionsmischungen) werden dann mit wäßriger essigsauren $MgSO_4$-Lösung ausgefällt und getrocknet.

| | |
|---|---|
| Pulver IV.1 | aus III.2 und I.1 |
| Pulver IV.2 | aus III.2 und I.2 |
| Pulver IV.3 | aus III.2 und I.3 |

Die Polymerisate II.1 bis II.3 werden mit wäßriger $MgSO_4$-Lösung koaguliert, und zu einem Pulver getrocknet.

| | |
|---|---|
| Pulver IV.4 | aus II.1 |
| Pulver IV.5 | aus II.2 |
| Pulver IV.6 | aus II.3 |

V) Formmassen

Durch Mischen der Pulver in einem 1,3 l Innenkneter bei ca, 200 °C wurden thermoplastische Formmassen hergestellt. Nach Spritzgußverarbeitung zu Probekörpern wurde das Brandverhalten nach UL 94 ermittelt. Dabei enthalten alle Formmassen neben den in Tabelle 1 angegebenen Bestandteilen als Additive 0,1 Gew.-Teile III.4.1, 20 Gew.-Teile III.4.2, 6,5 Gew.-Teile III.4.3 und 3 Gew.-Teile III.4.4.

Zur Klassifizierung nach UL 94 (Einstufung V0, V1, V2) siehe z.B. B.H. Jenker: Brandschutzausrüstung für Thermoplaste in R. Gächter und H. Müller "Taschenbuch der Kunststoff-Additive", Carl Hanser Verlag München, Wien 1979.

| Formmassen | III.1 Gew.-Teile | III.2 Gew.-Teile | III.3 Gew.-Teile | IV.1 Gew.-Teile | IV.2 Gew.-Teile | IV.3 Gew.-Teile | IV.4 Gew.-Teile | IV.5 Gew.-Teile | IV.6 Gew.-Teile | UL-94-Klassifizierung |
|---|---|---|---|---|---|---|---|---|---|---|
| V.1 (erfindungsgemäß) | 61 | 35 | - | - | - | - | 4 | - | - | V 0 |
| V.2 (erfindungsgemäß) | 57 | 35 | - | - | - | - | 8 | - | - | V 0 |
| V.3 (Vergleich) | 63 | 35 | 2 | - | - | - | - | - | - | V 0 |
| V.4 (Vergleich) | 65 | 35 | - | - | - | - | - | - | - | V 2 |
| V.5 (Vergleich) | 57 | 35 | - | - | - | - | - | 8 | - | V 2 |
| V.6 (Vergleich) | 57 | 35 | - | - | - | - | - | - | 8 | V 2 |
| V.7 (erfindungsgemäß) | 60 | - | - | 40 | - | - | - | - | - | V 0 |
| V.8 (Vergleich) | 60 | - | - | - | 40 | - | - | - | - | V 2 |
| V.9 (Vergleich) | 60 | - | - | - | - | 40 | - | - | - | V 2 |

Tabelle 1: Zusammensetzung der Formmassen und Brandverhalten nmach UL 94 (Underwriters Laboratories Test Nr. 94)

## Patentansprüche

**1.** Verwendung von Pfropfpolymerisaten aus

a) 5 bis 95 Gew.-% eines Copolymerisats von 20 bis 60 Gew.-% eines 1,3,5-Triazinderivats der Formel (I)

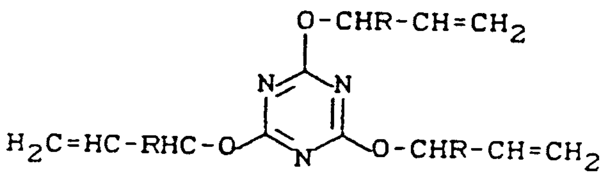

I

mit
R = H, $C_1$-$C_2$-Alkyl und
40 bis 80 Gew.-% anderen Vinylmonomeren als Pfropfgrundlage und
b) 5 bis 95 Gew.-% eines Polymerisats von Styrol, α-Methylstyrol, Paramethylstyrol, Acrylnitril, Methacrylnitril, $C_1$-$C_8$-Alkylacrylaten, $C_1$-$C_8$-Alkylmethacrylaten, Maleinimiden, Maleinanhydrid, Vinylether, Vinylester, Ethylen, Methacrylamid, Acrylsäure, Methacrylsäure, Styrol, Sulfonsäure oder von deren Mischungen als Pfropfauflage, als Flammschutzmittel für andere Chemiewerkstoffe, bevorzugt in Mengen von etwa 0,1 bis 20 Gew.-% (bezogen auf die flammgeschützte thermoplastische Formmasse).

## Claims

1. The use of graft polymers of
   a) 5 to 95% by weight of a copolymer of 20 to 60% by weight of a 1,3,5-triazine derivative corresponding to formula (I):

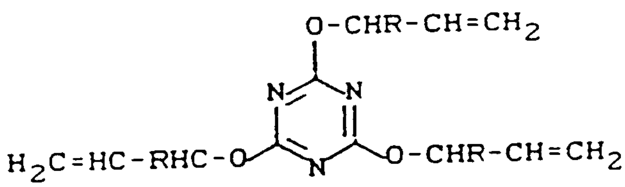

I

   in which
   R = H, $C_{1-2}$ alkyl, and
   40 to 80% by weight of other vinyl monomers as the graft base and
   b) 5 to 95% by weight of a polymer of styrene, α-methyl styrene, p-methyl styrene, acrylonitrile, methacrylonitrile, $C_{1-8}$ alkyl acrylates, $C_{1-8}$ alkyl methacrylates, maleic imides, maleic anhydride, vinyl ether, vinyl ester, ethylene, methacrylamide, acrylic acid, methacrylic acid, styrene, sulfonic acid or mixtures thereof as the graft shell,

   as flameproofing agents for other man-made materials, preferably in quantities of approximately 0.1 to 20% by weight, based on the flameproofed thermoplastic moulding compound.

## Revendications

1. Utilisation de polymères greffés constitués de
   a) 5 à 95 % en poids d'un copolymère de 20 à 60 % en poids d'un dérivé de 1,3,5-triazine de formule (I)

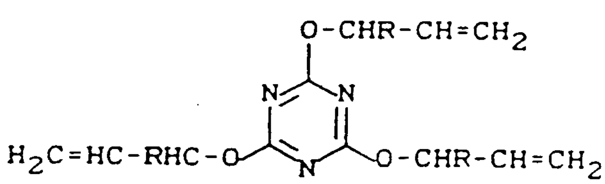

I

dans laquelle

R représente H, un groupe alkyle en $C_1$ ou $C_2$ et de 40 à 80 % en poids d'autres monomères vinyliques comme substrat de greffage et

b) de 5 à 95 % en poids d'un polymère de styrène, d'α-méthylstyrène, de paraméthylstyrène, d'acrylonitrile, de méthacrylonitrile, d'acrylates d'alkyle en $C_1$ à $C_8$, de méthacrylates d'alkyle en $C_1$ à $C_8$, de maléimides, d'anhydride maléique, d'éther de vinyle, d'ester de vinyle, d'éthylène, de méthacrylamide, d'acide acrylique, d'acide méthacrylique, de styrène, d'acide sulfonique ou de mélanges de ces monomères comme constituant à greffer,

comme agent retardateur de flamme pour d'autres matériaux chimiques, de préférence en quantités d'environ 0,1 à 20 % en poids (par rapport à la composition thermoplastique à mouler dont la combustion est retardée).